# EUROPEAN PATENT APPLICATION

(11) **EP 1 646 027 A1**
(43) Date of publication of application: **12.04.2006**
(21) Application number: 04023812.3
(22) Date of filing: 06.10.2004
(51) Int. Cl.: G09G 3/20, H04N 5/44

(54) **Video data scaler**

(71) Applicant: Harman Becker Automotive Systems GmbH, 76307 Karlsbad (DE)
(72) Inventor: Weisser, Pirmin, 78052 VS-Villingen (DE); Maier, Michael, 70854 VS-Schwenningen (DE); Orosz, Richard, 78086 VS-Brigachtal (DE)
(74) Representative: Grünecker, Kinkeldey, Stockmair & Schwanhäusser Anwaltssozietät

(57) **Abstract**

The present invention relates to a method for pre-scaling video data in a vertical direction prior to being processed in a graphic controller. The basis for the method is the replacement of certain horizontal sync data by blanking data in order to avoid certain predefined lines to be further processed and displayed. The underlying logic can be easily realised using a Field Programmable Gate Array interposed into the path of the data between video decoder and graphic controller. A low cost video data scaler that can be easily realised is provided that utilises the pre-scaling method.

## Description

The present invention relates to a video data scaler and a method for adjusting the size of video images. In particular, the present invention relates to a method for adjusting the size of video images to be displayed on a display having a different size than the video images to be displayed.

The problem of scaling a video data stream arises when properly displaying video images on a device having a number of lines and pixels per line other than the data received.

In particular, such a problem may arise, when a video image of a certain type has to be displayed on a display device that is originally designated for another kind of images (for instance television images on a computer monitor or vice versa). This may occur in vehicle entertainment and information equipment, wherein the same display devices are used to display information received via radio communication as well as from local sources such as a DVD-player as well as computer-generated information including graphics, e.g. from a navigation unit, or a combination thereof.

Television video data are transmitted and displayed in form of two interlaced fields. These two fields, which are designated as odd field and even field, make up one full frame and are displayed subsequently on the odd and even lines of the screen, respectively. The human eye integrates these two fields when they are viewed on a monitor, so that they appear as one continuous image.

On the other hand, displays basically designed for displaying graphics, such as computer monitors do not use interlacing. On such displays all lines of a full frame are displayed subsequently from top to bottom ("progressive scan"). In the graphics controller the first field of a frame is buffered until the second field is received.

Small LCD monitors used in portable devices or vehicle entertainment and information systems often have a number of lines corresponding to only a single field. Interlaced video having two fields per frame may be displayed on such small displays by scanning both fields of a frame on the same lines of the monitor one after the other. The eyes are able to integrate two fields into one complete frame in this case as well, and so a person perceives a resulting image with a full number of lines.

Television signals to be displayed on a graphics screen are digitally sampled and stored in a digital frame buffer. However, conventional graphics displays do not use the same combinations of numbers of pixels per line and numbers of lines per screen as used in the conventional digital TV schemes. Therefore a scaling procedure must be performed. Also, to be able to position the TV-image in an arbitrary window of the graphics screen, for instance a part not occupied by additional graphics information to be displayed simultaneously, the functionality of scaling up and down the sampled data is desired.

Another specific situation, in which video data scaling is required is the case, when the received data and the display device have a different aspect ratio. Very often the received video signals have an aspect ratio of 4:3. This is the aspect ratio of traditional TV systems. An aspect ratio of 4:3 is also common for film being stored on DVD, as most consumer level DVD players are restricted to reading and processing standard 4:3 video in NTSC, PAL or SECAM formats. On the other hand, more and more display screens have a wide screen aspect ratio, such as, e.g., 16 : 9 or a value nearby.

Moreover, the video image sizes differ between the different television standards. The above-mentioned NTSC, PAL and SECAM standards differ not only in the application of colour encoding methods but also in the number of lines per frame. PAL (and SECAM) use 625 lines per frame transmitted at a field rate of 50 Hz while NTSC is based on frames with 525 lines transmitted at a field rate of 60 Hz. These numbers of 525 and 625 lines per frame relate to the transmitted lines, whereas the number of active video lines is smaller. The active image area only includes approximately 575 lines for PAL and approximately 480 lines for NTSC. The remaining lines are employed for delimiting frame boundaries for vertical synchronization and for transmitting supplementary information.

LCD monitors have very often a number of lines to be displayed per frame corresponding to the active lines of the NTSC standard and an aspect ratio of approximately 16:9. When PAL fields are displayed on such a monitor, the number of active lines of a PAL frame has to be reduced to that of an NTSC frame. At the same time, the number of pixels per line has to be increased in order to cover the full area of a 16:9 screen with video image data having an original aspect ratio of 4:3. Therefore, the task arises to increase the size of an image in one direction (e.g. horizontally) and to decrease the size of the same image in the perpendicular direction (e.g. vertically).

Conventionally, such size adjusting procedures are performed in a graphic controller. A graphic controller is adapted to receive video data encoded in the luminance/chrominance colour video representation scheme into analogue red/green/blue ("RGB") data, that can be processed by standard display devices (such as VGA and modifications thereof).

In the luminance/chrominance scheme ("YUV"-scheme) used by the standard colour-TV coding schemes NTSC, PAL (and SECAM) instead of transmitting three separate signals representing the full information for each of the three primary colours red, green and blue, only an overall luminance ("Y") is transmitted at full bandwidth and difference signals ("U"="R"-"Y", "V"="B"-"Y") are transmitted at a reduced bandwidth.

Before performing a conversion a graphic controller buffers the video data in a frame buffer memory. When reading the data out of the buffer, the read out data can be filtered, the data sequence can be changed or interpolation can be performed between different data samples. By employing these procedures, the desired scaling is achieved.

It is a drawback of the above described conventional scaling approach that most of the graphic controllers employed for this purpose, in particular less expensive devices, are not able to independently scale in two perpendicular directions, i.e. for instance to upscale in horizontal direction and to downscale at the same time in vertical direction. Therefore, the scaling freedom of devices equipped with such a kind of graphic controller is limited. Standard graphic controllers of the described type are, for instance, "Orchid" and "Coral" from Fujitsu.

Consequently, the present invention aims to provide an improved scaling method and video data scaler of enhanced scaling capabilities in a simple manner.

This is achieved by the features of the independent claims.

According to a first aspect of the present invention, a method is provided for adjusting the size of video images of a video signal for display on a display unit having a different size. In a receiving step, the video signal including the video images of a predefined size is received. The predefined size has a number of lines and a number of pixels per line. Video signals further include horizontal sync data indicating the start or end of each line. At a first adjusting step, at least the horizontal sync data of a particular line are replaced by blanking data in order to adapt the vertical size of a video image to that of a display unit. In a second adjusting step, the number of pixels per line is adjusted in order to further adapt the horizontal size of the video image to that of the display unit.

According to a further aspect of the present invention, a video data scaler is provided for adjusting the size of video images of a video signal for display on a display unit having a different size. Said video signal includes video images of a predefined size. The predefined size has a number of lines and a number of pixels per line. The video signal further includes horizontal sync data indicating the start or end of each line. The video data scaler comprises a first adjusting unit for replacing at least the horizontal sync data of a particular line by blanking data in order to adapt the vertical size of a video image to that of the display unit. The video data scaler further comprises a second adjusting unit for adjusting the number of pixels per line in order to further adapt the horizontal size of the video image to that of the display unit.

It is the particular approach of the present invention to vertically pre-scale received video data by overwriting horizontal sync data corresponding to certain predefined image lines before the horizontal scaling is performed in a conventional scaling step. The pre-scaling is achieved by modifying the lines to be removed within the data stream such that these modified lines are not recognised by the graphic controller and thus not displayed.

When adjusting the vertical size as described, the vertical size is scaled down before the conventional scaling step only applies a single horizontal up-scaling process. Thus, vertical down- and horizontal up-scaling of one and the same image can be achieved in a cost effective manner.

Preferably, the first adjusting unit of the video data scaler in the first adjusting step replaces all data of a particular line not to be displayed by blanking data. In this case, it does not matter, whether the horizontal sync data corresponding to a line are located at the beginning or at the end of the video data of the line or both.

Preferably, the first adjusting unit of the video data scaler replaces the horizontal sync data of several lines. Which lines of the incoming video data stream are to be replaced is set in accordance with a predefined rule. Thus, it is possible to freely determine the number of lines of the incoming video data stream not to be displayed, i.e. the difference between the number of lines per image in the incoming data stream and the number of lines per image, which are displayed on the screen. The predefined rule determines, which particular lines are to be modified in order not to be displayed. Thus, an even distribution of the lines not to be displayed over the image frame can be guaranteed.

Alternatively, the top and/or bottom parts of an image can be modified in order to adapt the vertical size thereof.

Preferably, the horizontal adjustment of the number of pixels is performed by that graphic controller which is also employed for the display control. Most of the graphic controllers, in particular less expensive graphic controllers, can only adapt the image size in a corresponding manner in both horizontal and vertical direction, or leave one of the directions unchanged. Specifically, these graphic controllers do not provide the option to increase the image size in one direction while decreasing the image size in the other direction. By employing such graphic controllers for the horizontal adaptation and pre-processing the image signal by a vertical adjustment, an image size adaptation in horizontal an vertical directions can be achieved in a simple and cost efficient manner.

According to a preferred embodiment of the invention, the blanking data used for replacing parts of the video data for image size adjustments is a predefined data value. The predefined data value is preferably stored in a memory. For instance, the predefined data value corresponds to the blanking level of the received video signal.

Preferably, the received video signal is in accordance with a predefined standard. In a preferred embodiment of the invention, the data structure of the video signal received by the video data scaler of the invention is in compliance with ITU-R656 standard, one of the most widespread standards for digitized video data originating from PAL or NTSC television formats.

According to a preferred embodiment, the images of the received video signal have an aspect ratio of 4:3. As mentioned above, this is not only the standard aspect ratio of TV, but also the aspect ratio of video received from digital storing means such as DVD. Also even film material originally having a different aspect ratio is converted into 4:3 aspect ratio when stored on digital media.

Preferably, the received video signal is in compliance with one of the television standards PAL and NTSC.

According to a preferred embodiment, the display unit has a number of lines between 450 and 500. Preferably the number of lines is 480 or 483 corresponding to the active image portion of a NTSC video image.

According to a further preferred embodiment, the display has a number of pixels per line between 780 and 820. Preferably the number of pixels per line is 800. While the number of lines corresponds to the number of active lines of an NTSC video image, the number of 800 pixels per line enables a reproduction of video images in a wide screen format having an aspect ratio of approximately 16:9.

If the received video signal is in standard PAL format having 625 lines (approximately 575 of these being active) and 720 pixels per line, the present invention enables to easily adapt the image size of the PAL signal to that of the display screen. For this purpose, the number of active lines of the PAL image is decreased from approximately 575 to approximately 480 (down-scaling) and the number of pixels per line of the image is increased from 720 to approximately 800 (up-scaling). Accordingly, a single display type may be employed irrespective of the different video signal types to be reproduced, i.e. the same display can be used in a simple manner for the display of PAL or NTSC image data.

Preferably, the video data scaler according to the present invention is used in connection with a liquid crystal display.

According to a preferred embodiment, the video data scaler is part of a vehicle entertainment and information system. In a vehicle entertainment and information system, different video formats received from broadcasting or stored on storage media such as a DVD has to be processed and reproduced by standard displays. Moreover, graphic data has to be processed when using the vehicle entertainment and information system, for instance, in form of navigation information. The present invention enables to scale the various different image formats for display on a single display device.

The vertical scaling in accordance with the present invention is preferably implemented in form of a Field Programmable Gate Array (FPGA). The FPGA replaces particular data of the incoming video data stream for adjusting the vertical length. As FPGA modules are low cost products available on the market, the costs of a video data scaler in accordance with the present invention can be minimised.

Further embodiments of the present invention are subject matter of dependent claims.

Additional features and advantages of the present invention will become apparent from the following and more particular description as illustrated in the accompanying drawings, wherein:
- Fig. 1A, 1B and 1C: schematically illustrates the structure of a received video data signal comprising video image data and horizontal blanking intervals, a video data stream with horizontal blanking interval replaced by blanking data, and a video data signal with a full line replaced by blanking data, respectively;
- Fig. 2: illustrates an example for adapting the vertical image size by blanking particular lines according to a predefined rule;
- Fig.3: illustrates in block diagram form a conventional system for displaying video data received from a video decoder;
- Fig. 4: illustrates in block diagram form the configuration of a system for displaying a video signal received from a video decoder containing a video data scaler according to the present invention;
- Fig. 5: schematically illustrates the structure of a digitized video signal according to the ITU-R656 standard;
- Fig. 6: illustrates a modified ITU-R656 video data stream containing an extended blanking interval in accordance with a preferred embodiment of the invention; and
- Fig. 7: is a flow chart illustrating the steps of the video size adjusting processing according to the present invention.

Illustrative embodiments of the present invention will now be described with reference to the drawings.

The present invention particularly relates to the problem of scaling a received image to the size of the display unit for reproducing the received image. In view of the plurality of existing image sizes and aspect ratios which are all to be reproduced on a single display, a video data scaler can adapt the different image formats for display of the images without leaving display portions unused. This can be achieved by expensive video data scalers which are able to scale every image format to the display size. However, low cost video data scalers are only able to perform corresponding scaling operations such that a simultaneous up- and down-scaling of in the vertical and horizontal direction is not possible.

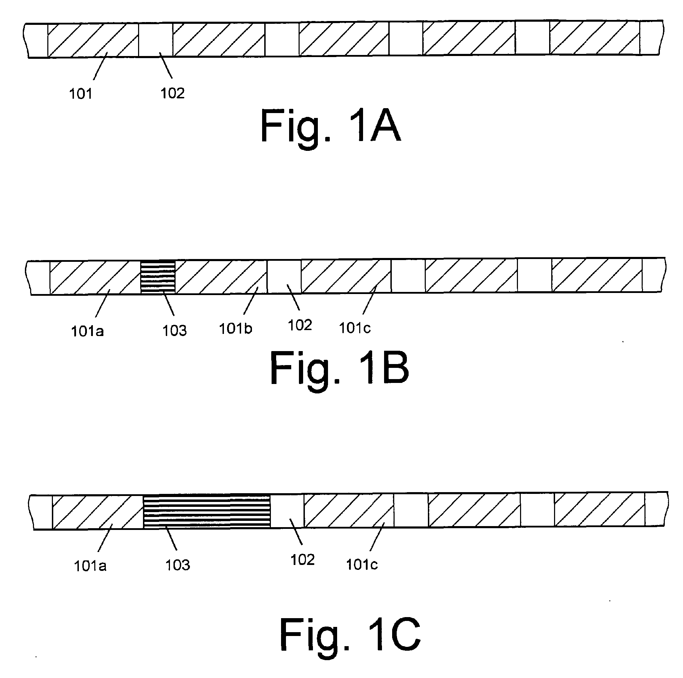

The approach of the present invention is generally illustrated in Fig. 1. Fig. 1A, Fig. 1B and Fig. 1C relate to the same portion of a video data signal. The video data signal as received is shown in Fig. 1A. The video data signal is made up of video image data 101 relating to an active line portion and blanking intervals 102 in between.

While the active image portions 101 contain luminance and chrominance information of each line, the blanking intervals 102 include horizontal sync data indicating the end of a previous and the start of a new line. The blanking intervals 102 may further comprise other data such as supplementary information transmitted together with the video data. The supplementary information may include, for instance, test data or service information.

As the blanking intervals indicate the borders between image data of subsequent lines, these borders can be manipulated in order to remove the line break information. In Fig. 1B, one of the blanking intervals 102 containing the horizontal sync data indicating the line break between the first and the second active line data 101a and 101b has been replaced with new blanking data 103. Accordingly, the line break information has been removed from the video signal and a subsequent processing can not recognize the start of new line 101b. The video data of line 101b consequently remain unprocessed. The next line to be processed by a subsequent processing stage is the line video data 101c.

Although Fig. 1B indicates to completely replace the blanking interval 102, it is also sufficient to only remove, i.e. overwrite, the horizontal sync data included within the blanking interval 102. The amount of video data to be replaced can be freely set between the minimum of removing only the horizontal sync data as far as removing the data of a complete line including the video data 101 and the associated blanking interval 102.

Fig. 1C illustrates the removal of a complete line from the received video data stream in accordance with the present invention. As shown in Fig. 1C, a blanking interval 102 together with the complete video image data 101 of the associated line of the video frame is replaced by blanking data.

As the information indicating the end of the present and the start of a new line has been removed, the graphic controller can not recognise the start of a new line and , therefore, discards the video data of the following line. The processing of a new line is only resumed upon recognizing the next unmodified blanking interval 102 indicating a line break between line data 101b and 101c. Accordingly, the size of a received video image can be adjusted in vertical direction in a simple manner by deleting individual lines of each image.

The number of lines to be modified and not to be displayed depends on the difference in vertical size between the received video image and the display screen. Although not described in detail in the present application, the individual lines to be modified are set in accordance with a predefined rule, preferably externally by a separate controller or within the device for the vertical size adjustment. The skilled person is aware that there exists a plurality of well known approaches for determining those lines not to be displayed. For instance, these lines may be distributed over the total length in vertical direction in equal manner. Alternatively, a larger number of subsequent lines at the top or bottom side of the image is modified and not displayed.

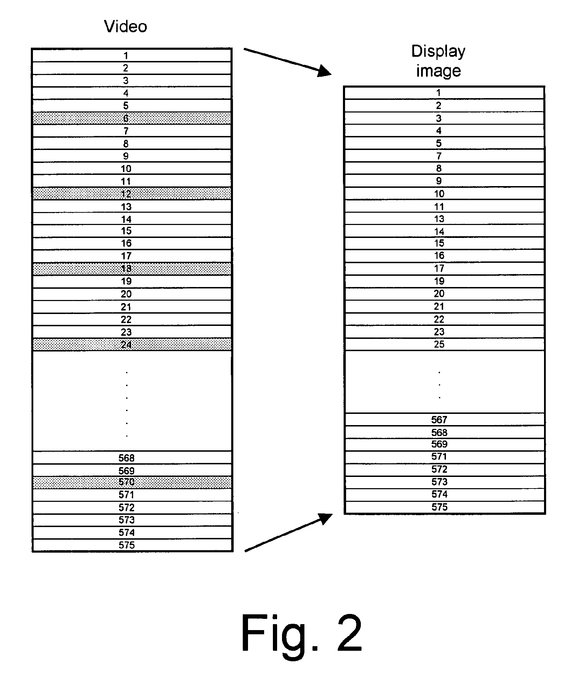

Fig. 2 is an illustration of a particular example for determining individual lines to be removed for an adaptation of the vertical size. According to the illustrated example, it is assumed that the received video signal contains 575 active lines in compliance with the PAL standard, while the display only provides 480 lines for the reproduction of these lines. The 480 lines enable an immediate reproduction of NTSC video data as each NTSC image contains 480 active lines. However, this display is not directly able to appropriately display the 575 active lines of PAL images.

In the example of Fig. 2, the lines to be removed from the PAL image before display are distributed over the total vertical image length. As illustrated in Fig. 2, every sixth line of a received video signal is modified and not displayed. For this purpose, the lines having the line numbers 6, 12, 18, 24... up to 570 are marked in the left hand video image illustration in Fig. 2 and removed for the display thereof. As a total of 95 lines is removed, a frame entering the graphic controller has a total amount of 575 - 95 = 480 active lines after applying a vertical scaling in accordance with the present invention.

In accordance with a similar approach called Mabiki, the lines not to be displayed are determined based on a more sophisticated rule in order to ensure that the line removal does not result in image degradations perceivable by the viewer. The Mabiki standard has been developed for reproducing PAL images on NTSC displays.

Alternatively, a predefined rule could contain the instruction to modify the lines numbered 1-48 and 528-575 of the active line portion of a frame. Thus, the top and bottom parts of an image containing 575 active lines are discarded and not displayed. while the central part is displayed with full resolution on a display that is only adapted to display 480 lines per frame. A person skilled in the art will appreciate that the number of lines to be modified and their distribution within a received frame is not limited to the examples as described above.

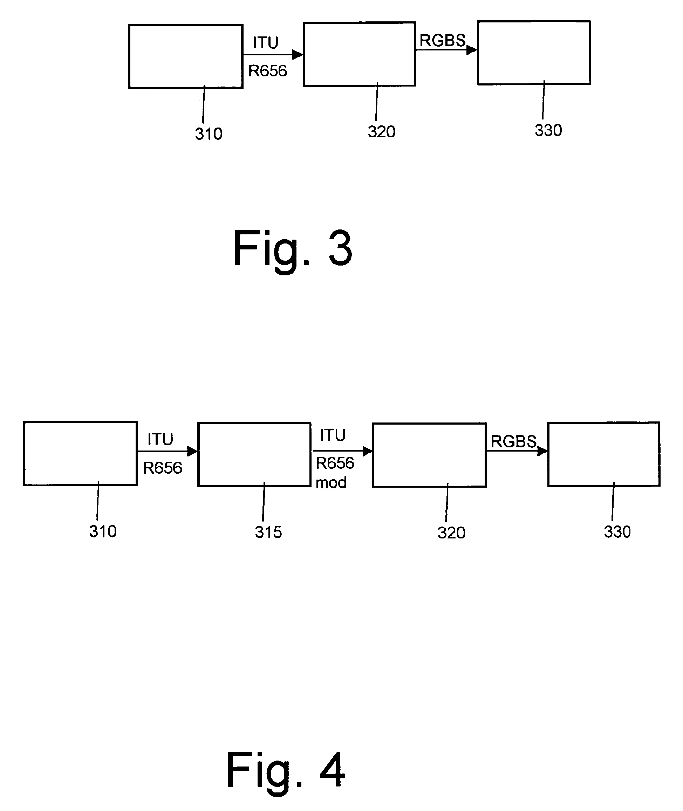

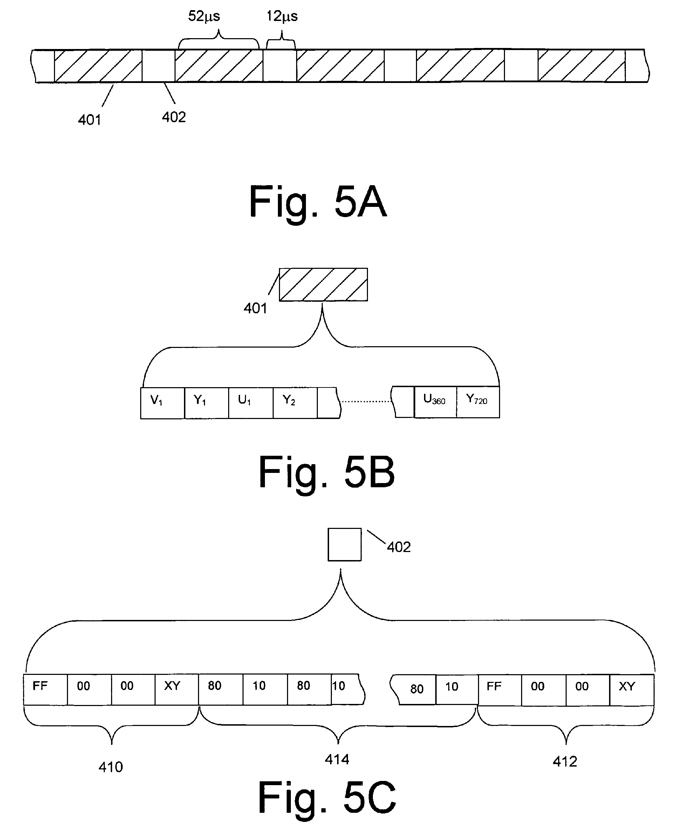

The configuration of a conventional video data processing system is described in connection with Fig. 3. The scaling of a received image depends on the capabilities of graphic controller 320. A digitised video data stream is provided by video decoder 310. Preferably, the video data stream is in compliance with the video data definitions as outlined in ITU Recommendation ITU-R656. The configuration of a video signal in accordance with the ITU Recommendation ITU-R656 is described in more detail in connection with Fig. 5.

The video data output by decoder 310 are transformed by graphic controller 320 into a form that can be processed by the display device 330. Preferably, the data sent to the display device 330 are in the form of RGB data. The graphic controller 320 does not only perform the image data format transformation into RGB type data, but additionally adjusts the images to any desired size that is within the capabilities of the graphic controller 320. While expensive and complex graphic controllers enable a wide range of scaling options, low cost graphic controllers only provide a small subset thereof resulting in reduced scaling capabilities.

Fig. 4 illustrates a video data processing system in accordance with a specific embodiment of the present invention. In contrast to the configuration shown in Fig. 3, an additional pre-processing unit 315 is provided together with a graphic controller 320 of limited scaling capabilities. A simple pre-processing performed by the processing unit 315 can enhance the scaling of video images in a simple manner, in particular without the usage of expensive graphic controllers.

The additional pre-processing unit 315 is switched between video decoder 310 and graphic controller 320. As conventional low cost graphic controllers are not able to simultaneously scale the vertical and horizontal direction in opposite manner, the pre-processing unit 315 modifies the received video data stream by overwriting particular data thereof. In this manner, the vertical size of the image can be reduced by eliminating individual horizontal sync data and inserting replacement data. The data of the video data stream are modified such that the time extension of the stream is still in compliance with the video standard of the data stream but the number of lines visible for the graphic controller 320 is reduced.

Each line which is not to be displayed is completely or partly overwritten by blanking data. According to a preferred embodiment, only the horizontal sync data corresponding to a line that is not be displayed is replaced by blanking data. The resulting modified ITU-R656 data stream is then applied to the graphic controller 320 and further processed as previously described in connection with Fig. 3 for reproduction on display 330. As the horizontal sync data of those lines to be discarded are missing, these lines can not be recognized by the graphic controller and thus not further processed. Thus, as an input the graphic controller receives a modified video data stream and performs horizontal scaling, but takes into account only those lines that are recognized, i.e. that had not been modified before.

In Fig. 5, the structure of a video data stream according to the ITU-R656 standard is illustrated in more detail. The signal portion of Fig. 5A includes the video data of the lines in consecutive manner. Each line portion comprises active video data 401 and a blanking interval 402 used for transmitting in particular control data. The active line video data 401 have a length of 52 microseconds and the blanking intervals 402 a length of 12 microseconds. These time intervals correspond to the intervals used for active line data and horizontal blanking intervals in both NTSC and PAL television standards.

Fig. 5B gives a more detailed insight into the video data structure of an active line video data segment 401, each of which containing 720 pixels. The active video data of each line includes the luminance and chrominance components of each pixel in the following order: V₁, Y₁, U₁, Y₂, V₂, U₂ etc.

The structure of the blanking intervals 402 is illustrated in more detail in Fig. 5C in compliance with the ITU-R-656 standard. The first item of each blanking interval 402 is a video timing reference code EAV 410. The EAV code meaning "End of Active Video" is a four-word sequence of the format: "FF 00 00 XY" (hexadecimal notation). The first three words are fixed, while the last word designated XY contains specific line information. For more detailed information, reference is made to the ITU Recommendation ITU-R656.

A second video timing reference code SAV is included in the last four words of the blanking interval 402. SAV 412 stands for "Start of Active Video". It is of the same format FF 00 00 XY as the EAV code. Both codes EAV and SAV differ by one bit of the last word XY.

The EAV and SAV codes indicate that one line of active video has been completed and a new line of active video starts. Thus, these codes represent the horizontal sync data in the video data stream.

The interval 414 between the EAV and SAV codes 410, 412 is employed for the transmission of any desired ancillary data. Unused portions of the blanking intervals that are not used for ancillary data are filled with the word sequence 80, 10, 80, 10, etc. (in hexadecimal notation) corresponding to the blanking level of the colour difference and luminance signals.

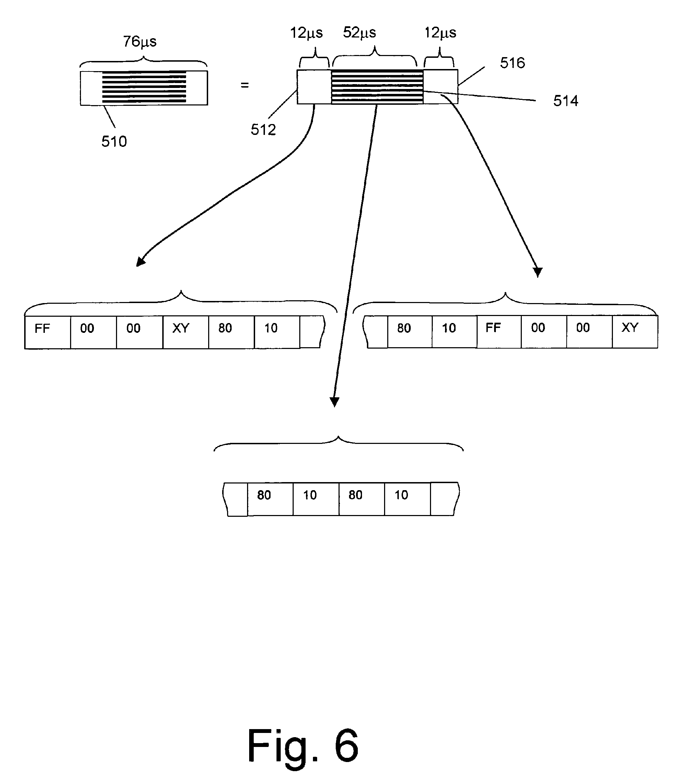

An example of an ITU-R656 video data stream which has been modified in accordance with a specific embodiment of the present invention is illustrated in Fig. 6. The displayed section of the data stream 510 comprises the time interval corresponding to a full active line 514 together with the directly preceding and succeeding blanking intervals 512 and 516.

In order to remove this line from those being displayed, the active line portion 514 has been modified together with the corresponding SAV and EAV sequences contained in the last part of blanking interval 512 and the first part of blanking interval 516, respectively. However, the first time reference code contained in blanking interval 512 (EAV indicating the end of the active line that has been transmitted immediately before) is preserved. The second time reference code of blanking interval 512 indicating the start of the next active line, the interval of the active line 514, and the first time reference code of blanking interval 516 (EAV) have been completely replaced by blanking data. This blanking data is symbolised by a sequence of words 80, 10, 80, 10 as explained in connection with Fig. 5. From all data blocks of the succeeding blanking interval 516, all data except the final time reference code SAV have been replaced by blanking data 80, 10 80 ... .

Accordingly, the complete interval 510 covering a time interval of 76 microseconds is only including blanking data with the exception of one start sequence EAV and one final sequence SAV. In this manner, the subsequent image data processing only recognizes a single start and end code and consequently only a single line although the time interval has a length for the transmission of video data of two lines. The remaining time reference codes EAV and SAV ensure that the line not to be displayed is skipped and the following active lines to be displayed can be properly identified by the graphic controller receiving the modified video data stream.

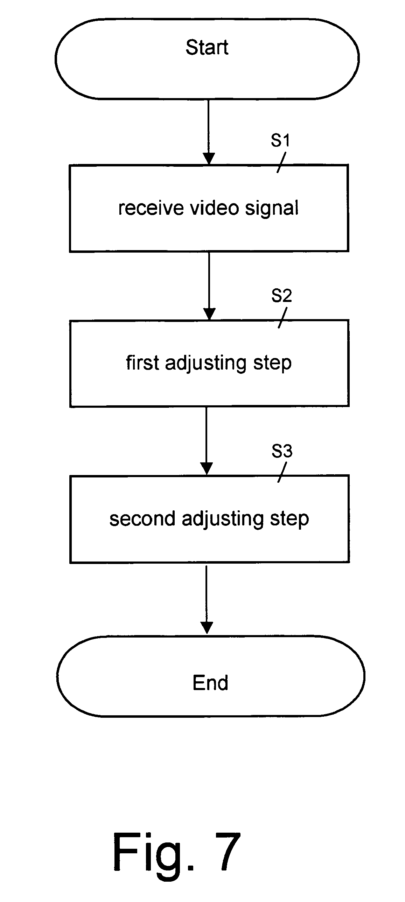

The processing steps of the present invention for adjusting the size of video images is now described with reference to Fig. 7. In step S1 a video signal containing video images of a predefined size and horizontal sync data is received. In a preferred embodiment the received video signal is a digitised signal output by a video decoder.

The size of the video images of the video signal is adapted in a two step procedure to the size of the display screen. In the first adjusting step (step S2) at least the horizontal sync data of those lines of the image which are not to be displayed is replaced by blanking data. As a result, these lines can not be recognised as an active line to be displayed by the subsequent processing steps of the video data stream. Thus, the size of the image is firstly only adjusted in vertical direction.

In the second adjusting step (step S3) the vertical size (i.e. the number of pixels per line) of the images as output by step S2 is adjusted as necessary in order to adapt the horizontal size to the width of the display screen. In particular, the original number of pixels per line is increased for larger horizontal display sizes. For this purpose, conventional interpolation methods are employed using the frame buffer of a graphic card. As the skilled person is aware of a plurality of existing approaches for this purpose, a further description thereof is omitted.

The video data stream resulting from step S3 has the desired horizontal and vertical size and the process of size adjustment is completed. The video signal output from the graphic controller may be further adapted to the required display format, for instance RGB, and is forwarded for reproduction to the display.

The size adjustment will now be described for a particular example of a video image size and display size in accordance with the present invention with reference to Fig. 7. In the example it is assumed, that a digitized PAL-signal with 720 pixels per line is to be displayed on a display being capable to display 480 lines per frame having 800 pixels per line.

Accordingly, the images of the received video data stream have a size of 720 x 575 [number of pixels per line x number of active lines to be displayed per image frame]. The first adjustment step (step S2) replaces the horizontal sync data of 95 lines, such that these lines are discarded and not further processed. The resulting size of the intermediate images as output by step S2 and forwarded to step S3 is 720 x 480. The selection of 95 lines to be discarded out of 575 active lines received is performed in accordance with a predefined rule. Alternative examples of such rules are given above. In the final step S3 the intermediate image size of 720 x 480 is up-scaled to 800 x 480 as required by the display device.

In summary, the present invention relates to a method for pre-scaling video data in a vertical direction prior to being processed in a graphic controller. The basis for the method is the replacement of certain horizontal sync data by blanking data in order to avoid certain predefined lines to be further processed and displayed. The underlying logic can be easily realised using a Field Programmable Gate Array interposed into the path of the data between video decoder and graphic controller. A low cost video data scaler that can be easily realised is provided that utilises the pre-scaling method.

## Claims

1. A method for adjusting the size of video images of a video signal for display on a display unit having a different size than the video images, the method comprising the steps of:
receiving (S1) a video signal including video images of a predefined size, the predefined size having a predefined number of lines and a predefined number of pixels per line, the video signal further including horizontal sync data indicating the start or end of each line,
a first adjusting step (S2) for replacing at least the horizontal sync data of a particular line by blanking data in order to adapt the vertical size of a video image to that of the display unit, and
a second adjusting step (S3) for adjusting the number of pixels per line in order to further adapt the horizontal size of the video image to that of the display unit.

2. A method according to claim 1, wherein said first adjusting step (S2) replacing all data of said particular line by blanking data.

3. A method according to claim 1 or 2, wherein said first adjusting step (S2) replacing the horizontal sync data of particular lines, said particular lines being distributed over the total image length in vertical direction according to a predefined rule.

4. A method according to any of claims 1 to 3, wherein said second adjusting step (S3) being performed by a graphic controller (320), said graphic controller (320) being adapted to either increase the size of said received video images in horizontal and/or vertical direction or to decrease the size of said received video images in horizontal and/or vertical direction.

5. A method according to any of claims 1 to 4, wherein said received video signal being a digital signal.

6. A method according to any of claims 1 to 5, wherein said horizontal sync data comprising data indicating the start of a new line of said received video signal.

7. A method according to claim 6, wherein said horizontal sync data further comprising data indicating the end of a line of said received video data.

8. A method according to any of claims 1 to 5, wherein said horizontal sync data comprising data indicating the end of a line of said received video signal.

9. A method according to any of claims 1 to 8, wherein said blanking data being a predefined sequence of data.

10. A method according to any of claims 1 to 8, wherein said blanking data correspond to the blanking level of said received video signal.

11. A method according to any of claims 1 to 10, wherein said received video signal being in compliance with a predefined standard.

12. A method according to claim 11, wherein said blanking data is blanking data in accordance with said predefined standard.

13. A method according to claim 11 or 12, wherein said predefined standard is the ITU-R656 standard.

14. A method according to any of claims 1 to 13, wherein said received video signal has an aspect ratio of 4:3.

15. A method according to any of claims 1 to 14, wherein said received video signal is in compliance with one of the television standards PAL and NTSC.

16. A method according to any of claims 1 to 15, wherein said display unit (330) has a number of lines between 450 and 500, preferably 480.

17. A method according to any of claims 1 to 16, wherein said display unit (330) has a number of pixels per line between 780 and 820, preferably 800.

18. A method according to any of claims 1 to 17, wherein said display unit (330) is a liquid crystal display.

19. A method according to claim 18, wherein said liquid crystal display is part of a vehicle entertainment and information system.

20. A video data scaler for adjusting the size of video images of a video signal for display on a display unit (330) having a different size than the video images, said video signal including video images of a predefined size, the predefined size having a number of lines and a number of pixels per line, the video signal further including horizontal sync data indicating the start or end of each line, the video data scaler comprising:
a first adjusting unit (315) for replacing at least the horizontal sync data of a particular line by blanking data in order to adapt the vertical size of a video image to that of the display unit (330), and
a second adjusting unit (320) for adjusting the number of pixels per line in order to further adapt the horizontal size of the video image to that of the display unit (330).

21. A video data scaler according to claim 20, wherein said first adjusting unit (315) replacing all data of said particular line by blanking data.

22. A video data scaler according to claim 20 or 21, wherein said first adjusting unit (315) replaces the horizontal sync data of particular lines, said particular lines being distributed over the total image length in vertical direction according to a predefined rule.

23. A video data scaler according to any of claims 20 to 22, wherein said second adjusting unit (320) being part of a graphic controller, said graphic controller being adapted to either increase the size of said received video images in horizontal and/or vertical direction or to decrease the size of said received video images in horizontal and/or vertical direction.

24. A video data scaler according to any of claims 20 to 23, wherein said received video signal is a digital signal.

25. A video data scaler according to any of claims 20 to 24, wherein said horizontal sync data comprising data indicating the start of a new line of said received video signal.

26. A video data scaler according to claim 25, wherein said horizontal sync data further comprising data indicating the end of a line of said received video signal.

27. A video data scaler according to any of claims 20 to 24, wherein said horizontal sync data comprising data indicating the end of a line of said received video signal.

28. A video data scaler according to any of claims 20 to 27, further comprising a memory for storing a predefined blanking data.

29. A video data scaler according to any of claims 20 to 27, wherein said blanking data correspond to the blanking level of said received video signal.

30. A video data scaler according to any of claims 20 to 29, wherein said received video signal is in compliance with a predefined standard.

31. A video data scaler according to claim 30, wherein said blanking data is the blanking data according to said predefined standard.

32. A video data scaler according to claim 30 or 31, wherein said predefined standard is the ITU-R656 standard.

33. A video data scaler according to any of claims 20 to 32, wherein said received video signal has an aspect ratio of 4:3.

34. A video data scaler according to any of claims 20 to 33, wherein said received video signal is in compliance with one of the television standards PAL and NTSC.

35. A video data scaler according to any of claims 20 to 34, wherein said display unit (330) has a number of lines between 450 and 500, preferably 480.

36. A video data scaler according to any of claims 20 to 35, wherein said display unit (330) has a number of pixels per line between 780 and 820, preferably 800.

37. A video data scaler according to any of claims 20 to 36, wherein said display unit (330) is a liquid crystal display.

38. A video data scaler according to claim 37, wherein said liquid crystal display is part of a vehicle entertainment and information system.

39. A video data scaler according to any of claims 20 to 38, wherein said first adjusting unit (315) is a Field Programmable Gate Array.

40. A vehicle entertainment and information device comprising:
a receiving unit (310) for receiving video data including video images;
a display unit (330) for displaying said video images; and
a video data scaler in accordance with any of claims 20 to 39 for adjusting the size of said video images to the size of said display unit (330).
